# EUROPÄISCHE PATENTSCHRIFT

(11) **EP 2 010 423 B1**
(45) Veröffentlichungstag und Bekanntmachung des Hinweises auf die Patenterteilung: **23.02.2011**
(21) Anmeldenummer: 07727306.8
(22) Anmeldetag: 23.03.2007
(51) Int. Cl.: B60W 30/16, B60W 30/18, B60K 31/04, B60W 20/00, B60W 10/06, B60W 10/08, B60W 10/18

(54) **GESCHWINDIGKEITSREGELVORRICHTUNG UND KRAFTFAHRZEUG MIT EINER SOLCHEN GESCHWINDIGKEITSREGELVORRICHTUNG**
SPEED CONTROL APPARATUS AND MOTOR VEHICLE WITH A SPEED CONTROL APPARATUS OF THIS TYPE
DISPOSITIF DE REGULATION DE LA VITESSE ET VEHICULE AUTOMOBILE EQUIPE D'UN TEL DISPOSITIF DE REGULATION DE LA VITESSE

(30) Priorität: 12.04.2006 DE 102006017176
(43) Veröffentlichungstag der Anmeldung: 07.01.2009
(73) Patentinhaber: Robert Bosch GmbH, 70442 Stuttgart (DE)
(72) Erfinder: HAUG, Karsten, 70372 Stuttgart (DE)
(86) Internationale Anmeldenummer: PCT/EP2007/052832
(87) Internationale Veröffentlichungsnummer: WO 2007/118763

(56) Entgegenhaltungen:
- EP-A- 1 619 067
- DE-A- 10 205 770
- DE-A1- 19 719 458
- DE-C1- 10 143 735

## Beschreibung

### Stand der Technik

Die Erfindung betrifft eine Geschwindigkeitsregelvorrichtung für Kraftfahrzeuge mit Hybridantrieb, mit einem Regler, in dem mehrere Betriebsmodi implementiert sind, die sich in ihren Regelstrategien unterscheiden und mindestens einen Öko-Modus umfassen, dessen Regelstrategie für eine kraftstoffsparende Fahrweise optimiert ist, und mit einer Benutzerschnittstelle, die eine Eingabeeinrichtung zur Wahl des Betriebsmodus aufweist.

Bekannte eschwindigkeitsregelvorrichtungen erlauben es im Rahmen einer Tempomat-Funktion, die Geschwindigkeit des eigenen Fahrzeugs auf eine vom Fahrer gewählte Wunschgeschwindigkeit zu regeln. Weiterhin sind fortgeschrittene Geschwindigkeitsregelvorrichtungen, sogenannte ACC-Systeme (Adaptive Cruise Control) bekannt, die darüber hinaus in der Lage sind, mit Hilfe eines Radarsensors oder eines vergleichbaren Ortungssystems ein in der eigenen Spur vorausfahrendes Fahrzeug zu orten, dessen Abstand und Relativgeschwindigkeit zu messen und dann durch Eingriff in das Antriebssystem und ggf. auch das Bremssystem des eigenen Fahrzeugs die Geschwindigkeit so zu regeln, daß das vorausfahrende Fahrzeug in einem angemessenen Sicherheitsabstand verfolgt wird.

Wenn im Rahmen der Geschwindigkeits- oder Abstandsregelung eine Soll/Ist-Abweichung auftritt, so wird eine Regelstrategie benötigt, die bestimmt, in welcher Weise und mit welchem zeitlichen Verlauf der Istwert wieder an den Sollwert herangeführt werden soll. Parameter, die diese Regelstrategie maßgeblich bestimmen, sind z.B. obere und untere Grenzwerte für die Beschleunigung des eigenen Fahrzeugs. Der obere Grenzwert bestimmt die maximale Fahrzeugbeschleunigung, die im Rahmen der Regelung vom Antriebssystem des Fahrzeugs angefordert werden soll, und der (negative) untere Grenzwert bestimmt die maximale Verzögerung, mit der das Fahrzeug verzögert werden soll. Andere Parameter können beispielsweise festlegen, unter welchen Bedingungen ein Eingriff in das Bremssystem erfolgen soll.

Bei der Festlegung dieser Parameter sind verschiedene Zielsetzungen zu berücksichtigen, die einander zum Teil widersprechen. Zum einen soll natürlich die notwendige Verkehrssicherheit gewährleistet sein. Weiterhin soll eine Fahrweise erreicht werden, die für den Fahrer und die Fahrzeuginsassen möglichst komfortabel ist und die darüber hinaus möglichst kraftstoffsparend ist. Andererseits soll jedoch auch der Verkehrsfluß nicht unnötig behindert werden, und das Systemverhalten sollte möglichst weitgehend dem intuitiven Fahrverhalten eines menschlichen Fahrers entsprechen. Wenn beispielsweise auf der Überholspur einer Autobahn ein langsameres vorausfahrendes Fahrzeug verfolgt wird und dieses Fahrzeug dann auf die rechte Nebenspur ausschert, so sollte das eigene Fahrzeug möglichst zügig wieder auf die Wunschgeschwindigkeit beschleunigt werden, damit der Überholvorgang des eigenen Fahrzeugs abgekürzt und der nachfolgende Verkehr nicht behindert wird. Bisher beruht die Festlegung der die Regelstrategie bestimmenden Parameter auf einem Kompromiß zwischen den verschiedenen Zielsetzungen.

Aus DE 10143 735 C ist eine Geschwindigkeitsregelvorrichtung nach dem Oberbegriff des Anspruchs 1 bekannt.

Aus der DE 19719 458 A ist ein Geschwindigkeitsregelsystem bekannt, das eine vom Fahrer vorbestimmte Geschwindigkeit konstant hält. Über die Minderung der Belastung durch Gasgeben/-halten besonders über lange hinaus soll dem Fahrer ein bisher unbekanntes, als natürlich empfundenes Fahrgefühl vermittelt werden, daß sich die Fahrgeschwindigkeit entsprechend seinen augenblicklichen Wünschen und der aktuellen Verkehrslage einstellt.

Aus der EP 1619 067 A ist eine Fahrgeschwindigkeitsregelung eines Kraftfahrzeuges bekannt, bei der eine Wunschbeschleunigung aus den Daten eines Fahrpedals und eines Bedienelementes zur Auswahl eines Wunschbeschleunigungs-Modus ausgewählt wird. Über das Bedienelement wählt der Fahrer aus, in welchem Modus, beispielsweise sportlich oder komfortabel, eine Geschwindigkeitsdifferenz zwischen einer Istgeschwindigkeit und einer Sollgeschwindigkeit grundsätzlich ausgeglichen werden soll.

### Offenbarung der Erfindung

Aufgabe der Erfindung ist es, eine Geschwindigkeitsregelvorrichtung zu schaffen, die eine besonders kraftstoffsparende Fahrweise erlaubt.

Diese Aufgabe wird erfindungsgemäß dadurch gelöst daß der Regler dazu eingerichtet ist, eine Sollbeschleunigung des Fahrzeugs innerhalb eines Wertebereichs zulässiger Sollbeschleunigungen zu berechnen, und daß die Wertebereiche sich für die verschiedenen Betriebsmodi unterscheiden indem die Obergrenze für die Beschleunigung so festgelegt ist, daß die benötigte Antriebsleistung vom elektrischen Antrieb bereitgestellt werden kann und somit die Brennkraftmaschine ihren optimalen Betriebspunkt nicht zu verlassen braucht.

Der Fahrer hat die Möglichkeit, unter bestimmten Bedingungen, beispielsweise in Abhängigkeit von seinen derzeitigen Prioritäten oder in Abhängigkeit von der Verkehrssituation, einen besonders kraftstoffsparenden Betriebsmodus zu wählen, der im folgenden als Öko-Modus bezeichnet werden soll. Im allgemeinen wird in diesem Betriebsmodus die Regelstrategie durch eine niedrigere Obergrenze und eine höhere Untergrenze für die Beschleunigung gekennzeichnet sein.

Bei einem Hybridantrieb ist zur Erzeugung der Antriebsleistung neben einer Brennkraftmaschine ein Elektromotor vorgesehen, der aus einer wiederaufladbaren Batterie gespeist wird. Der Elektromotor kann bei einer Verzögerung des Fahrzeugs auch als Bremse/Generator betrieben werden, so daß ein Teil der Bewegungsenergie wieder zurückgewonnen und in der Batterie gespeichert werden kann. Ein intelligentes Antriebsmangament sorgt dafür, daß die Brennkraftmaschine so oft und so lange wie möglich an ihrem optimalen Betriebspunkt betrieben wird, an dem sie mit dem höchsten Wirkungsgrad arbeitet. Wenn die Leistung der Brennkraftmaschine in diesem Zustand nicht ausreicht, wird die fehlende Leistung durch den elektrischen Antrieb bereitgestellt, während umgekehrt überschüssige Leistung zum Wiederaufladen der Batterie genutzt werden kann. Durch dieses Antriebskonzept kann der Kraftstoffverbrauch deutlich gesenkt werden.

Die Erfindung erlaubt es nun dem Fahrer, einen Öko-Modus zu wählen, in dem die Regelstrategie optimal auf die Bedürfnisse des Hybridantriebs abgestimmt ist. Erfindungsgemaß ist in diesem Modus die Obergrenze für die Beschleunigung so festgelegt daß die benötigte Antriebsleistung vom elektrischen Antrieb bereitgestellt werden kann und somit die Brennkraftmaschine ihren optimalen Betriebspunkt nicht zu verlassen braucht. Ebenso ist die Untergrenze für die Beschleunigung so festgelegt ist, daß die bei der Verzögerung freiwerdende Bewegungsenergie vom Generator vollständig in elektrische Energie umgesetzt werden kann und somit keine Energie durch Aktivierung der Reibungsbremse des Fahrzeugs verlorengeht.

Im Bedarfsfall, beispielsweise wenn bei höherer Verkehrsdichte eine eher dynamische Fahrweise angezeigt ist, damit Spurwechsel auf mehrspurigen Fahrbahnen gefahrlos vorgenommen werden können, kann der Fahrer jederzeit in den "normalen" Betriebsmodus umschalten, in dem höhere Fahrzeugbeschleunigungen und - verzögerungen zugelassen sind.

Vorteilhafte Weiterbildungen der Erfindung ergeben sich aus den Unteransprüchen.

Bei einer Fahrt mit annähernd konstanter Geschwindigkeit kann es unter Umständen zweckmäßig sein, die Sollgeschwindigkeit zu variieren, insbesondere zu senken, wenn dadurch ein ungünstiger Betriebszustand, etwa ein Zurückschalten auf eine niedrigere Getriebestufe, vermieden werden kann. Umgekehrt kann in anderen Situationen eine Kraftstoffersparnis durch eine leichte Erhöhung der Sollgeschwindigkeit erreicht werden, beispielsweise dann, wenn dadurch ein Umschalten auf eine höhere Getriebestufe ermöglicht wird.

Eine Erhöhung der Sollgeschwindigkeit über die vom Fahrer gewählte Wunschgeschwindigkeit hinaus ist jedoch problematisch, weil der Fahrer diese Wunschgeschwindigkeit möglicherweise gewählt hat, um eine bestehende Geschwindigkeitsbeschränkung zu respektieren. Wenn es im Öko-Modus zum Zweck der Kraftstoffersparnis erforderlich ist, die Sollgeschwindigkeit über die Wunschgeschwindigkeit hinaus zu erhöhen, sollte deshalb der Fahrer eine Warnmeldung erhalten, oder die Erhöhung sollte nur dann zugelassen werden, wenn der Fahrer eine diesbezüglich vom System ausgegebene Anfrage bestätigt.

Die die Regelstrategie kennzeichnenden Parameter, beispielsweise die Ober- und Untergrenzen für die Beschleunigung, können auch situationsabhängig variieren, beispielsweise in Abhängigkeit von der Fahrbahnsteigung, der Zuladung des Fahrzeugs und dergleichen.

Bei dem auf den Hybridantrieb abgestimmten Öko-Modus kann die Regelstrategie auch vom Ladezustand der Batterie abhängig sein. Beispielsweise kann bei niedrigem Ladezustand der Batterie die Sollgeschwindigkeit reduziert werden, damit eine gewisse Überschußleistung der Brennkraftmaschine zum Wiederaufladen der Batterie zur Verfügung steht.

Bei bekannten ACC-Systemen ist Bestandteil der Regelstrategie auch eine sogenannte Eintauchstrategie, die bestimmt, wie weit das eigene Fahrzeug bei der Annäherung an ein langsameres vorausfahrendes Fahrzeug in den angemessenen Sicherheitsabstand "eintauchen" kann. Auch diese Eintauchstrategie kann sich im Öko-Modus von der im normalen Modus unterscheiden. Im Rahmen der Abstandsregelung ist der Sollabstand typischerweise geschwindigkeitsabhängig, und er ist durch eine vom Fahrer innerhalb gewisser Grenzen wählbare Zeitlücke bestimmt, die den zeitlichen Abstand zwischen dem vorausfahrenden Fahrzeug und dem eigenen Fahrzeug angibt. Im Öko-Modus kann es zweckmäßig sein, diese Zeitlücke zu vergrößern, damit mehr Spielraum für die Einstauchstrategie zur Verfügung steht.

Bei Fahrzeugen mit Hybridantrieb ist eine sinnvolle Zusammenarbeit zwischen der Geschwindigkeitsregelvorrichtung und dem Antriebsmanagement anzustreben. Diese Zusammenarbeit kann zweckmäßig so gestaltet sein, daß das Antriebsmanagement die Entscheidungen über die Wahl der Antriebsquelle, die Wahl der Getriebestufe und dergleichen trifft und die Geschwindigkeitsregelvorrichtung immer dann eine Meldung vom Antriebsmanagement erhält, wenn durch eine Modifikation der Sollbeschleunigung und/oder Sollgeschwindigkeit eine signifikante Kraftstoffersparnis erreicht werden könnte.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Fig. 1: ein Blockdiagramm einer erfindungsgemäßen Geschwindigkeitsregelvorrichtung;
- Fig. 2: ein Diagramm zur Illustration unterschiedlicher Regelstrategien; und
- Fig. 3: ein Geschwindigkeits/Zeit-Diagramm zur Veranschaulichung der Auswirkungen unterschiedlicher Regelstrategien.

### Ausführungsform der Erfindung

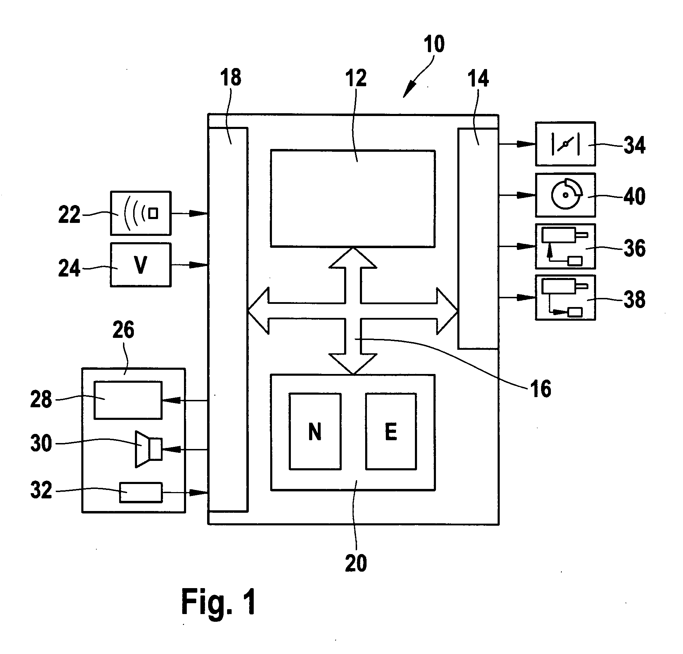

In Fig. 1 ist als Beispiel für eine Geschwindigkeitsregelvorrichtung gemäß der Erfindung ein ACC-System für ein Fahrzeug mit Hybridantrieb dargestellt. Ein elektronisches Steuergerät 10 umfaßt einen Regler 12 zur Geschwindigkeits- und Abstandsregelung und ein Antriebsmanagementsystem 14, die über ein Bussystem 16 miteinander sowie mit einer Schnittstelleneinheit 18 und einem Programm- und Parameterspeicher 20 kommunizieren. Die Schnittstelleneinheit 18 empfängt Ortungsdaten für die Abstandsregelung von einem im Fahrzeug eingebauten Radarsensor 22 sowie ein Signal eines Geschwindigkeitsmessers 24 des Fahrzeugs, der die Istgeschwindigkeit V des eigenen Fahrzeugs angibt. Mit der Schnittstelleneinheit 18 ist außerdem eine Benutzerschnittstelle 26 verbunden, die ein Display 28 und eine akustische Ausgabeeinrichtung in der Form eines Lautsprechers 30 zur Ausgabe von Informationen an den Fahrer aufweist. Die Benutzerschnittstelle 26 enthält außerdem eine durch einen oder mehrere Schalter gebildete Eingabeeinrichtung 32, über die der Fahrer Bedienungsbefehle eingeben kann.

Das Antriebsmanagementsystem 14 steuert den Hybridantrieb des Fahrzeugs, der eine Brennkraftmaschine 34 sowie einen elektromechanischen Wandler umfaßt, der sowohl als Elektromotor 36 als auch als Generator 38 arbeiten kann. Im gezeigten Beispiel greift das Antriebsmanagementsystem 14 auch in das Bremssystem 40 des Fahrzeugs ein. Wenn ein Bremsbefehl vom Regler 12 oder vom Fahrer selbst gegeben wird, so entscheidet das Antriebsmanagementsystem 14 ob die nötige Bremsverzögerung allein mit Hilfe des Generators 38 erreicht werden kann oder ob zusätzlich das herkömmliche, auf Reibungsbremsen basierende Bremssystem 40 des Fahrzeugs aktiviert werden muß.

Der Regler 12 berechnet anhand der vom Radarsensor 22 und vom Geschwindigkeitsmesser 24 gelieferten Daten sowie ggf. anhand gewisser Zusatzinformationen über den Zustand des Fahrzeugs, z.B. die Giergeschwindigkeit, in bekannter Weise eine Sollbeschleunigung a, die die Grundlage für den Eingriff in das Antriebs- und/oder Bremssystem des Fahrzeugs bildet. Im hier gezeigten Beispiel wird diese Sollbeschleunigung unmittelbar an das Antriebsmanagementsystem 14 übergeben, das dann entscheidet, wie die geforderte Beschleunigung oder Verzögerung auf möglichst verbrauchsgünstige Weise erreicht werden kann.

Im Programm- und Parameterspeicher 20 sind Parametersätze und ggf. Programm-Module gespeichert, auf die der Regler 12 über das Bussystem 16 zugreift und die zwei unterschiedliche Betriebsmodi spezifizieren, in denen der Regler 12 arbeiten kann. Einer dieser Betriebsmodi ist ein normaler Betriebsmodus N, der der herkömmlichen Funktion eines ACC-Systems entspricht. Der andere Betriebsmodus ist ein Öko-Modus E, der unter Berücksichtigung der Eigenschaften des Hybridantriebs (innerhalb gewisser Grenzen) auf eine möglichst verbrauchsgünstige Fahrweise optimiert ist. Insbesondere spezifizieren die im Programm- und Parameterspeicher 20 abgelegten Parametersätze für jeden Betriebsmodus eine Obergrenze a_max_N und a_max_E sowie eine Untergrenze a_min_N bzw. a_min_E für die Sollbeschleunigung a, die an das Antriebsmanagement 14 ausgegeben werden kann. Die Untergrenzen sind negativ und geben somit die jeweils zugelassene maximale Fahrzeugverzögerung an.

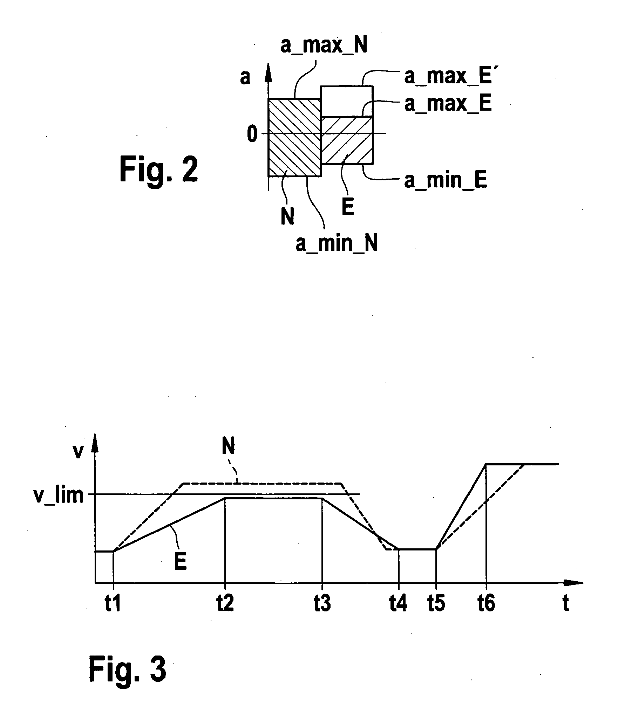

Wie Fig. 2 zeigt, ist die Obergrenze a_max_E für die Beschleunigung im Öko-Modus E kleiner als die entsprechende Obergrenze im normalen Modus N, und die Untergrenze a_min_E im Öko-Modus E ist größer als die entsprechende Untergrenze im normalen Modus N. Im Öko-Modus E ist somit der zulässige Beschleunigungsbereich stärker eingegrenzt, wodurch eine kraftstoffsparendere Fahrweise erreicht wird. Insbesondere sind die Grenzen im Öko-Modus so gewählt, daß die entsprechende Beschleunigung oder Verzögerung möglichst mit Hilfe des Elektromotors 36 bzw. des Generators 38 erreicht werden kann, ohne daß die Brennkraftmaschine 34 ihren optimalen Betriebspunkt verlassen muß.

Unter bestimmten Bedingungen kann jedoch im Öko-Modus E auch eine größere Obergrenze a_max_E' für die Beschleunigung gelten, die sogar höher ist als die Obergrenze im normalen Modus N. Dies ist z.B. dann der Fall, wenn die Sollgeschwindigkeit wesentlich größer ist als die augenblickliche Istgeschwindigkeit und deshalb eine "vernünftige" Beschleunigung des Fahrzeugs so groß sein müßte, daß das Getriebe um einen Gang zurückgeschaltet werden müßte und/oder von der Brennkraftmaschine 34 eine höhere Leistung als am optimalen Betriebspunkt abverlangt würde. In dem Fall bewirkt die höhere Beschleunigung, daß die Sollgeschwindigkeit schneller erreicht wird und somit der verbrauchsungünstige Zustand nur relativ kurze Zeit dauert, so daß sich insgesamt eine Kraftstoffersparnis ergibt.

In Fig. 3 ist das Systemverhalten anhand eines Geschwindigkeits/Zeitdiagramms illustriert. Die gestrichelt eingezeichnete und mit N gekennzeichnete Kurve gibt den Geschwindigkeitsverlauf im normalen Betriebsmodus N an, während die in durchgezogenen Linien eingezeichnet und mit E bezeichnete Kurve den entsprechenden Geschwindigkeitsverlauf im Öko-Modus E angibt.

Zwischen den Zeitpunkten t1 und t2 ist die Beschleunigung im Öko-Modus E kleiner als im normalen Modus N, so daß die Beschleunigungsphase entsprechend länger dauert. v_lim bezeichnet eine Grenzgeschwindigkeit, die unter den aktuellen Betriebsbedingungen ein Umschalten des Antriebssystems in einen anderen Betriebszustand erfordert. Bei einer Geschwindigkeit knapp oberhalb von v_lim wäre der Kraftstoffverbrauch signifikant höher als bei einer Geschwindigkeit knapp unterhalb dieses Grenzwertes. Aus diesem Grund ist im Öko-Modus E vorgesehen, daß zwischen den Zeitpunkent t2 und t3 die Sollgeschwindigkeit - abweichend von der vom Fahrer gewählten Wunschgeschwindigkeit - auf einen Wert unterhalb von v_lim herabgesetzt wird, so daß die Kraftstoffersparnis ausgenutzt werden kann. Dies gilt selbstverständlich nur in den Fällen, in denen die vom Fahrer gewählte Wunschgeschwindigkeit nur wenig über v_lim liegt.

Zum Zeitpunkt t3 wird vom Radarsensor 22, dessen Ortungstiefe beispielsweise 150 m beträgt, ein langsameres vorausfahrendes Fahrzeug geortet. Im Öko-Modus E setzt dann unverzüglich die Verzögerung des Fahrzeugs ein, allerdings mit einer relativ kleinen Verzögerungsrate. Im normalen Modus N wird dagegen dichter auf das vorausfahrende Fahrzeug aufgeschlossen, bevor die Verzögerung beginnt, dann jedoch mit größerer Verzögerungsrate. Im gezeigten Beispiel wird die neue Sollgeschwindigkeit, die der Geschwindigkeit des vorausfahrenden Fahrzeugs entspricht, im Öko-Modus E erst zu einem Zeitpunkt t4 erreicht, während sie im normalen Modus N bereits zu einem früheren Zeitpunkt erreicht würde. Das bedeutet, daß im Öko-Modus eine geringe und vorübergehende Unterschreitung des Sollabstands zum vorausfahrenden Fahrzeug eher zugelassen wird als im normalen Modus N.

Zum Zeitpunkt t5 hat das vorausfahrende Fahrzeug auf eine Nebenspur gewechselt, so daß die Fahrbahn wieder frei ist. Außerdem hat inzwischen der Fahrer die Wunschgeschwindigkeit deutlich erhöht. In diesem Fall entspricht die Beschleunigungsrate im Öko-Modus E der erhöhten oberen Grenze a_ max_E' in Figur 2, so daß die neue Wunschgeschwindigkeit schon zum Zeitpunkt t6 erreicht wird, während im normalen Modus N die Beschleunigungsphase verlängert wäre.

Der Regler 12 ist vorzugsweise so konfiguriert, daß er bei Aktivierung des ACC-Systems im Öko-Modus E arbeitet. Über die Bedienungseinrichtung 32 kann der Fahrer jedoch jederzeit in den normalen Modus N umschalten und wieder in den Öko-Modus E zurückschalten.

## Patentansprüche

1. Geschwindigkeitsregelvorrichtung für Kraftfahrzeuge, mit einem Regler (12) und einer Benutzerschnittstelle (26), wobei in dem Regler (12) mehrere Betriebsmodi (N, E) implementiert sind, die sich in ihren Regelstrategien unterscheiden und mindestens einen Öko-Modus (E) umfassen, dessen Regelstrategie für eine kraftstoffsparende Fahrweise optimiert ist, die Benutzerschnittstelle (26) eine Eingabeeinrichtung (32) zur Wahl des Betriebsmodus aufweist, und die Regelstrategie im Öko-Modus (E) vom Betriebszustand und/oder vom Leistungsvermögen der verschiedenen Antriebs- und Bremsaggregate (34, 36, 38) des Hybridantriebs abhängig ist, **dadurch gekennzeichnet, daß** der Regler (12) dazu eingerichtet ist, eine Sollbeschleunigung (a) des Fahrzeugs innerhalb eines Wertebereich zulässiger Sollbeschleunigungen zu berechnen, und daß die Wertebereiche sich für die verschiedenen Betriebsmodi unterscheiden wobei im öko-Modus die Obergrenze für die Beschleunigung so festgelegt ist, daß die benötigte Antriebsleistung vom elektrischen Antrieb bereitgestellt werden kann und somit die Brennkraftmaschine ihren optimalen Betriebspunkt nicht zu verlassen braucht.

2. Geschwindigkeitsregelvorrichtung für Kraftfahrzeuge, mit einem Regler (12) und einer Benutzerschnittstelle (26), wobei in dem Regler (12) mehrere Betriebsmodi (N, E) implementiert sind, die sich in ihren Regelstrategien unterscheiden und mindestens einen Öko-Modus (E) umfassen, dessen Regelstrategie für eine kraftstoffsparende Fahrweise optimiert ist, die Benutzerschnittstelle (26) eine Eingabeeinrichtung (32) zur Wahl des Betriebsmodus aufweist, und die Regelstrategie im Öko-Modus (E) vom Betriebszustand und/oder vom Leistungsvermögen der verschiedenen Antriebs- und Bremsaggregate (34, 36, 38) des Hybridantrlebs abhängig ist, **dadurch gekennzeichnet, daß** der Regler (12) dazu eingerichtet ist, eine Sollbeschleunigung (a) des Fahrzeugs innerhalb eines Wertebereichs zulässiger Sollbeschleunigungen zu berechnen, und daß die Wertebereiche sich für die verschiedenen Betriebsmodi unterschelden wobei im öko-Modus die Un tegrenze für die Beschleunigung so festgelegt ist daß, die bei der Verzögerung freiwerdende Bewegungsenergie vom Generator vollständig in elektrische Energie umgesetzt werden kann und somit keine Energie durch Aktivierung der Reibungsbremse des Fahrzeugs verlorengeht.

3. Geschwindigkeitsregelvorrichtung nach einem der vorstehenden Ansprüche, **dadurch gekennzeichnet, daß** der Regler (12) im Öko-Modus (E) dazu eingerichtet ist, abhängig vom Betriebszustand des Hybridantriebs auf eine Sollgeschwindigkeit zu regeln, die von einer vom Fahrer gewählten Wunschgeschwindigkeit abweicht.

4. Geschwindigkeitsregelvorrichtung nach Anspruch 3, **dadurch gekennzeichnet, daß** die Sollgeschwindigkeit im Öko-Modus (E) sich um höchstens 10% von der Sollgeschwindigkeit in dem oder den anderen Betriebsmodi (N) unterscheidet.

5. Kraftfahrzeug mit einem Hybridantrieb **gekennzeichnet durch** eine Geschwindigkeitsregelvorrichtung nach einem der vorstehenden Ansprüche.

## Claims

1. Cruise controller for motor vehicles, having a controller (12) and a user interface (26), wherein a plurality of operating modes (N, E) are implemented in the controller (12), said operating modes (N, E) differing in their control strategies and comprising at least one eco mode (E) whose control strategy is optimized for a driving style which is economical in terms of fuel, the user interface (26) has an input device (32) for selecting the operating mode, and the control strategy in the eco mode (E) is dependent on the operating state and/or on the power capacity of the various drive units and brake units (34, 36, 38) of the hybrid drive, **characterized in that** the controller (12) is configured to calculate a setpoint acceleration (a) of the vehicle within a value range of permissible setpoint accelerations, and **in that** the value ranges differ for the various operating modes, wherein in the eco mode the upper limit for the acceleration is defined in such a way that the required driving power can be made available by the electric drive, and the internal combustion engine therefore does not need to leave its optimum operating point.

2. Cruise controller for motor vehicles, having a controller (12) and a user interface (26), wherein a plurality of operating modes (N, E) are implemented in the controller (12), said operating modes (N, E) differing in their control strategies and comprising at least one eco mode (E) whose control strategy is optimized for a driving style which is economical in terms of fuel, the user interface (26) has an input device (32) for selecting the operating mode, and the control strategy in the eco mode (E) is dependent on the operating state and/or on the power capacity of the various drive units and brake units (34, 36, 38) of the hybrid drive, **characterized in that** the controller (12) is configured to calculate a setpoint acceleration (a) of the vehicle within a value range of permissible setpoint accelerations, and **in that** the value ranges differ for the various operating modes, wherein in the eco mode the lower limit for the acceleration is defined in such a way that the kinetic energy which is released during deceleration can be converted completely into electrical energy by the generator, and therefore no energy is lost through activation of the friction brake of the vehicle.

3. Cruise controller according to one of the preceding claims, **characterized in that** the controller (12) is configured in the eco mode (E) to carry out an adjustment, as a function of the operating state of the hybrid drive, to a setpoint speed which differs from a desired speed which is effected by the driver.

4. Cruise controller according to Claim 3, **characterized in that** the setpoint speed in the eco mode (E) differs by at most 10% from the setpoint speed in the other operating mode or modes (N).

5. Motor vehicle having a hybrid drive, **characterized by** a cruise controller according to one of the preceding claims.

## Revendications

1. Dispositif de régulation de vitesse pour véhicules automobiles, qui présente un régulateur (12) et une interface d'utilisateur (26),
plusieurs modes de fonctionnement (N, E) qui se distinguent par leur stratégie de régulation et qui comprennent au moins un mode économique (E) qui est optimisé en vue d'une conduite économisant le carburant pouvant être mis en oeuvre dans le régulateur (12),
l'interface d'utilisateur (26) présentant un dispositif d'introduction (32) qui permet de sélectionner le mode de fonctionnement et
la stratégie de régulation en mode économique (E) dépendant de l'état de fonctionnement et/ou de la puissance des différents systèmes d'entraînement et de freinage (34, 36, 38) de l'entraînement hybride, **caractérisé en ce que**
le régulateur (12) est conçu pour calculer une accélération de consigne (a) du véhicule à l'intérieur d'une plage de valeurs admissibles de l'accélération de consigne,
**en ce que** les plages de valeurs diffèrent dans les différents modes de fonctionnement et
**en ce qu'**en mode économique, la limite supérieure de l'accélération est définie de telle sorte que la puissance d'entraînement nécessaire puisse être délivrée par l'entraînement électrique et qu'ainsi le moteur à combustion interne ne doive pas quitter son point de fonctionnement optimal.

2. Dispositif de régulation de vitesse pour véhicules automobiles, qui présente un régulateur (12) et une interface d'utilisateur (26),
plusieurs modes de fonctionnement (N, E) qui se distinguent par leur stratégie de régulation et qui comprennent au moins un mode économique (E) qui est optimisé en vue d'une conduite économisant le carburant pouvant être mis en oeuvre dans le régulateur (12),
l'interface d'utilisateur (26) présentant un dispositif d'introduction (32) qui permet de sélectionner le mode de fonctionnement et
la stratégie de régulation en mode économique (E) dépendant de l'état de fonctionnement et/ou de la puissance des différents systèmes d'entraînement et de freinage (34, 36, 38) de l'entraînement hybride, **caractérisé en ce que**
le régulateur (12) est conçu pour calculer une accélération de consigne (A) du véhicule à l'intérieur d'une plage de valeurs admissibles de l'accélération de consigne,
**en ce que** les plages de valeurs diffèrent dans les différents modes de fonctionnement et
**en ce qu'**en mode économique, la limite inférieure de l'accélération est définie de telle sorte que l'énergie de déplacement libérée lors du ralentissement puisse être convertie complètement en énergie électrique dans la génératrice et qu'ainsi aucune énergie ne soit perdue par activation des freins à friction du véhicule.

3. Dispositif de régulation de vitesse selon l'une des revendications précédentes, **caractérisé en ce qu'**en mode économique (E), le régulateur (12) est conçu pour réguler une vitesse de consigne qui dépend de l'état de fonctionnement de l'entraînement hybride et qui s'écarte d'une vitesse souhaitée sélectionnée par le conducteur.

4. Dispositif de régulation de vitesse selon la revendication 3, **caractérisé en ce qu'**en mode économique (E), la vitesse de consigne diffère d'au plus 10 % de la vitesse de consigne du ou des autres modes de fonctionnement (N).

5. Véhicule automobile doté d'un entraînement hybride, **caractérisé par** un dispositif de régulation de vitesse selon l'une des revendications précédentes.
